(19) Europäisches Patentamt
European Patent Office
Office européen des brevets

(11) **EP 3 624 984 B1**

(12) **EUROPÄISCHE PATENTSCHRIFT**

(45) Veröffentlichungstag und Bekanntmachung des Hinweises auf die Patenterteilung:
**15.12.2021 Patentblatt 2021/50**

(21) Anmeldenummer: **18724847.1**

(22) Anmeldetag: **14.05.2018**

(51) Int Cl.:
*B23K 26/00* (2014.01)    *B23K 26/046* (2014.01)
*B23K 26/064* (2014.01)    *B23K 26/0622* (2014.01)
*B23K 26/53* (2014.01)    *B23K 26/066* (2014.01)
*B23K 103/00* (2006.01)    *B23K 101/40* (2006.01)

(86) Internationale Anmeldenummer:
**PCT/EP2018/062365**

(87) Internationale Veröffentlichungsnummer:
**WO 2018/210746 (22.11.2018 Gazette 2018/47)**

(54) **VORRICHTUNG UND VERFAHREN ZUM TRENNEN EINES WERKSTÜCKS ENTLANG EINER VORBESTIMMTEN BEARBEITUNGSLINIE UNTER VERWENDUNG EINES GEPULSTEN POLYCHROMATISCHEN LASERSTRAHLES UND EINES FILTERS**

DEVICE FOR AND METHOD OF DIVIDING A WORKPIECE ALONG A PREDETERMINED PROCESSING LINE USING A PULSED POLYCHROMATIC LASER BEAM AND A FILTER

DISPOSITIF ET PROCÉDÉ POUR DIVISER UNE PIÈCE LE LONG D'UNE LIGNE D'USINAGE PRÉDÉFINIE EN UTILISANT UN FAISCEAU LASER PULSÉ POLYCHROMATIQUE ET UN FILTRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.05.2017 DE 102017208290**

(43) Veröffentlichungstag der Anmeldung:
**25.03.2020 Patentblatt 2020/13**

(73) Patentinhaber: **SCHOTT AG**
**55122 Mainz (DE)**

(72) Erfinder:
• **ORTNER, Andreas**
**55435 Gau-Algesheim (DE)**
• **WAGNER, Fabian**
**55118 Mainz (DE)**
• **SEIDL, Dr. Albrecht**
**63843 Niedernberg (DE)**
• **SCHMITT, Simon**
**65189 Wiesbaden (DE)**
• **LENTES, Frank-Thomas**
**55411 Bingen (DE)**
• **THOMAS, Jens Ulrich**
**55128 Mainz (DE)**

(74) Vertreter: **Ullrich & Naumann PartG mbB**
**Schneidmühlstrasse 21**
**69115 Heidelberg (DE)**

(56) Entgegenhaltungen:
US-A1- 2006 289 410     US-A1- 2016 001 397
US-A1- 2016 031 745     US-A1- 2016 167 166
US-B1- 9 270 080

EP 3 624 984 B1

**Beschreibung**

Die Erfindung betrifft eine Vorrichtung und ein Verfahren zum Trennen eines Werkstücks, insbesondere eines Werkstücks das Glas oder Glaskeramik umfasst, entlang einer vorbestimmten Bearbeitungslinie gemäß dem Oberbegriff der Ansprüche 1 und 9 (siehe z.B. US 2016/031745 A1).

Vorrichtungen und Verfahren zum Bearbeiten, insbesondere zum Trennen oder zum Filamentieren und anschließenden Trennen von Werkstücken insbesondere aus Glas oder Glaskeramik, entlang einer vorbestimmten Bearbeitungslinie unter Verwendung von gepulsten Laserstrahlen sind seit einigen Jahren bekannt.

Unter Ausnutzung des Kerr-Effektes kommt es bei hinreichend hoher Intensität eines Laserstrahls zu einer nichtlinearen Wechselwirkung zwischen dem elektromagnetischen Feld des Laserstrahls mit einem Werkstück zu einer Selbstfokussierung des Laserstrahls, bei der Fokaldurchmesser deutlich unter dem Durchmesser eines Gauß-Strahls erreicht werden. Durch die hohe Intensität im Fokus entsteht im Werkstück ein Plasma, das defokussierend auf den Laserstrahl wirkt. Ist die Intensität des verbleibenden Laserstrahls groß genug wird der Laserstrahl erneut fokussiert usw.. Durch die wiederholende Anwendung von nichtlinearer Fokussierung und plasmabedingter Defokussierung des Laserstrahls im gegenseitigen Gleichgewicht kommt es zur Ausbildung eines quasi "Wellenleiters", der auch als Filament bezeichnet wird. In einem für den Laserstrahl im wesentlichen transparenten Werkstück wirkt der derart geführte Laserstrahl entlang seiner Wegstrecke modifizierend auf das Werkstück: Es kommt zur Ausbildung filamentförmiger Veränderungen im Werkstück, die bei geeigneter Prozessführung (Z.B. Burst-Modus der Laserquelle) in Form von Mikrokanälen mit Durchmessern im Submikrometerbereich ausgebildet werden können (US 2013/0126573 A1).

Alternativ hat sich in Weiterbildung der Filamentierung die Anwendung spezieller optischer Anordnungen als vorteilhaft erwiesen, die die Ausbildung eines entlang der Laserstrahlachse (Strahlrichtung) langgezogenen Fokusses, häufig auch als Brennlinie bezeichnet, ermöglichen. Hierzu werden beispielsweise sogenannte Axikons oder Linsen mit großer sphärischer Aberration verwendet (EP 2 754 524 A1), die die besondere Eigenschaft besitzen, Laserstrahlanteile in Abhängigkeit von ihrer Entfernung zur Laserstrahlachse auf verschiedene Fokuspunkte entlang eines Bereichs in Propagationsrichtung (Strahlrichtung) hinter der optischen Anordnung abzubilden. Somit kommt es zur Ausbildung einer in der Laserstrahlachse liegenden Brennlinie, deren Länge durch feste funktionale Abhängigkeiten vorhergesagt werden kann. Die Intensitätsverteilung quer der optischen Laserstrahlachse wird hierbei durch die Mathematik der Besselfunktionen beschrieben; entlang der Laserstrahlachse wird ein sogenannter Besselstrahl ausgebildet. Der Vorteil dieses Verfahrens liegt darin, dass das Filament nicht durch das kompliziert einzustellende Gleichgewicht von Selbstfokussierung und Plasma-Defokussierung eingestellt werden muss, sondern die Energie des Laserstrahls kontinuierlich von allen Seiten in Richtung Laserstrahlachse gebracht wird, so dass sich eine "kontinuierliche" Intensitätsverteilung im Überlappbereich entlang der optischen Laserstrahlachse ausbildet, deren konkreter Verlauf entscheidend von der Intensitätsverteilung des ursprünglichen Laserstrahls beeinflusst wird. Beispiele für typische Intensitätsverläufe bei Verwendung eines Gaußstrahls oder eines idealen Zylinderhut-Profils (Top-Hat-Profils. D.h. eine abschnittsweise konstante Funktion, deren Funktionswert an den Rändern des Abschnitts durch einen (üblicherweise steilen) kontinuierlichen Übergang erreicht werden) sind in CN 102785031 A beschrieben.

Die Verteilung der Intensität, die in ein Werkstück eingebracht werden kann, entlang der ursprünglichen Propagationsrichtung des Laserstrahls hat entscheidenden Einfluss auf die Länge des Filaments.

Bei Verwendung eines Burst-Modus kann durch die Summenwirkung der wiederholt an einer Stelle hochfrequent eingebrachten Laserpulse eine transiente thermische Wirkung des Laserstrahls hervorgerufen werden, die über die Modifikation des Materials des Werkstücks hinaus zu einer bleibenden Vorschädigung in Form von Mikrokanälen führt: Im Detail entsteht der Mikrokanal durch den ersten Puls des Burstpulszuges, die Größe der Schädigungszone um den Mikrokanal wird durch die nachfolgenden Pulse des Bursts sowie die Materialparameter eingestellt.

Bewegt sich das Werkstück während des Filamentierens entlang einer vorgegebenen Bearbeitungslinie (z. B. x-y-Koordinaten bzw. Koordinaten entlang der Oberfläche des Werkstücks, Sollkontur), so wird es entlang dieser Bearbeitungslinie durch die nebeneinander in vorgegebenem Abstand erzeugten Mikrokanäle quasi perforiert. Durch nachfolgende Trennprozesse, beispielsweise erzeugen eines Temperaturschocks mit einem $CO_2$-Lasers (Cleaving), können die Mikrokanäle durch Risse miteinander verbunden und das Werkstück entlang der Bearbeitungslinie getrennt werden (US 2015/165560 A). Vorteil der derart erzeugten Bruchflächen sind deren geringe Rauheit, hervorragende Formtreue und Festigkeit der hergestellten Kanten des Werkstücks.

Das Verfahren lässt sich bei Werkstücken mit größerer Dicke als Länge der Brennlinie durch sukzessive Abwendung in verschiedenen Materialtiefen auch auf relativ dicke Werkstücke, beispielsweise mit Dicken von 4 mm bis 16 mm anwenden.

Nachteil der beschriebenen Verfahren ist, dass die Transformation eines aus Sicht der Laserquelle "idealen" Gaußstrahls in einen Besselstrahl zu einer inhomogenen Intensitätsverteilung in der Brennlinie und damit zu Inhomogenitäten in der Bruchfläche des zu bearbeitenden Werkstücks führt. Abweichungen vom idealen Gaußstrahl ($M^2 > 1$) verschlechtern die Situation zusätzlich. Das aus Sicht des zu erzeugenden Filaments ideale Top-Hat-Profil hingegen ist nur schwer zu erzeugen.

Weitere Vorrichtungen oder Verfahren zum Bearbeiten von Werkstücken mittels eines gepulsten Laserstrahls sind in folgenden Schriften beschrieben: DE 10 2012 110 971 A1, DE 10 2015 110 422 A1, DE 10 2015 116 848 A1, DE 10 2015 111 491 A1, DE 10 2015 116 846 A1, DE 10 2015 111 490 A1, DE 10 2015 120 950 A1, DE 10 2016 102 768 A1, DE 10 2017 100 015.1, DE 10 2017 206 461.7, DE 10 2017 100 755.5, DE 10 2017 103 381.5, EP 2 754 524 A1, US 2005/0024743 A1, KR 101 407994 B1.

Weiterhin sind folgende Vorrichtungen und Verfahren zum Bearbeiten, insbesondere zum Trennen oder zum Filamentieren und anschließenden Trennen von Werkstücken aus Glas oder Glaskeramik, entlang einer vorbestimmten Bearbeitungslinie unter Verwendung von gepulsten, polychromatischen Laserstrahlen bekannt:

US 2012/0255935 A1 beschreibt ein Verfahren zum Bearbeiten eines Werkstücks mittels eines gepulsten, polychromatischen Laserstrahls. Mittels einer Linse wird eine Brennlinie entlang der Strahlrichtung des Laserstrahls erzeugt wird, wobei die Brennlinie aus mehreren Fokussen besteht.

US 2016/167166 A1 beschreibt die Materialbearbeitung mit einem Laserstrahl einstellbarer Fokallänge.

JP 2010-158686 A beschreibt die Materialbearbeitung mit multispektraler Energiequelle unter Erzeugung eines linienhaften Fokusses.

WO 2016/077171 A2 beschreibt das gemeinsame kollineare Einfädeln der Strahlen mehrerer Laserquellen in ein gemeinsames Strahlführungssystem und Bearbeitung eines Werkstücks mittels Laserstrahlen durch wellenlängenabhängiges Fokussieren in unterschiedliche Materialtiefen des Werkstücks.

Aus US 2005/0205536 A1 ist ein Verfahren und eine Vorrichtung zur Strukturierung von Material mittels eines Laserstrahls bekannt, wobei der fokussierte Laserstrahl ein eingestelltes Wellenlängenverteilungsmuster aufweist.

Aus EP 2 250 529 B1 ist eine Quelle optischer Superkontinuumstrahlung bekannt.

Die Laserbearbeitung von Laminaten wird in der Schrift US 2016/0009066 A1 beschrieben.

Bei den bekannten Vorrichtungen und Verfahren lässt sich die Bearbeitungstiefe in einem Werkstück nicht oder nur sehr aufwendig selektiv und ungenau einstellen. Die so bearbeiteten Werkstücke lassen sich entlang einer Bearbeitungslinie zum Teil gar nicht, nur recht ungenau oder mit mangelhafter Trennkannte durch äußere Einwirkung, insbesondere durch mechanische oder thermische Einwirkung, trennen.

Es ist Aufgabe der Erfindung eine Vorrichtung und ein Verfahren zum Trennen eines Werkstücks entlang einer vorbestimmten Bearbeitungslinie mittels eines gepulsten, polychromatischen Laserstrahls bereitzustellen. Vorrichtung und Verfahren sollen sich besonders zum Trennen von Werkstücken aus Glas oder Glaskeramik oder von Werkstücken, die Glas oder Glaskeramik umfassen, z.B. Stapel aus Glas- oder Glaskeramikscheiben, Stapel aus Gläsern und Glaskeramiken unterschiedlicher chemischer Zusammensetzung, Glas-Kunststoff-Laminate, eignen. Gemäß der Erfindung soll sich das bearbeitete Werkstück durch äußere Einwirkung entlang der vorbestimmten Bearbeitungslinie, insbesondere durch mechanische oder thermische Einwirkung, leicht, genau und reproduzierbar trennen lassen.

Gelöst wird die Aufgabe gemäß Anspruch 1 mittels einer Vorrichtung zum Trennen eines Werkstücks entlang einer vorbestimmten Bearbeitungslinie.

Diese Vorrichtung enthält wenigstens:

- Mittel zum Erzeugen eines gepulsten, polychromatischen Laserstrahls,

- eine optische Anordnung zur Erzeugung einer Brennlinie entlang der Strahlrichtung des Laserstrahls, wobei die optische Anordnung eine chromatische Aberration zum wellenlängenabhängigen Fokussieren des Laserstrahls und wenigstens einem Filter zum wellenlängenabhängigen Filtern des Laserstrahls aufweist,

- Mittel zum Erzeugen einer Relativbewegung zwischen Laserstrahl und Werkstück entlang der vorbestimmten Bearbeitungslinie, um das Werkstück mittels Einwirkung des fokussierten Laserstrahls zu bearbeiten.

Die Erfinder konnten zeigen, dass sich mittels der erfindungsgemäßen Vorrichtung die Bearbeitungstiefe in einem Werkstück selektiv und genau einstellen lässt. Die Vorrichtung eignet sich besonders gut zum Bearbeiten von Werkstücken aus Glas oder Glaskeramik oder von Werkstücken, die Glas oder Glaskeramik umfassen, z.B. Stapel aus Glas- oder Glaskeramikscheiben, Stapel aus Gläsern und Glaskeramiken unterschiedlicher chemischer Zusammensetzung, Glas-Kunststoff-Laminate.

Bei einem gepulsten, polychromatischen Laserstrahl mit insbesondere bestimmter Pulsdauer und mit bestimmten Wellenlängen des Laserstrahls kann mittels der optischen Anordnung mit chromatischer Aberration zum wellenlängenabhängigen Fokussieren des Laserstrahls und mit wenigstens einem Filter zum wellenlängenabhängigen Filtern des Laserstrahls eine Brennlinie entlang der Strahlrichtung des Laserstrahls erzeugt werden, bei der die Bearbeitungstiefe des Werkstücks selektiv und genau eingestellt werden kann. Insbesondere kann die Länge der Brennlinie über die Erzeugung unterschiedlicher Fokusse eingestellt werden.

Mittels eines Filters kann selektiv wenigstens eine Wellenlänge des Laserstrahls gefiltert werden, so dass wenigstens an einer bestimmten Stelle in der Brennlinie selektiv kein Fokus entsteht. Insbesondere ist es möglich durch einseitige oder beidseitige Begrenzung des optischen Spektrums (Einführung eines Bandkantenfilters bzw. Bandpassfilters) einen definierten Start- oder Endpunkt der Brennlinie zu definieren. In einer gesonderten Ausführungsform wird insbesondere der Endpunkt (auf der dem Laser abgewandten Seite) definiert eingestellt, um beispielsweise eine Bearbeitung einer Unterlage auf der das Werkstück aufliegt zu vermeiden.

In weiteren Ausführungsformen werden Werkstücke, insbesondere Glas-Metall-Laminate von der Glasseite her bearbeitet ohne Modifikation oder Abtrag des Metalls. In einer weiteren Ausführungsform werden die entlang der Brennlinie erzeugten Mikrokanäle zur direkten Durchkontaktierung auf die metallische Schicht verwendet, die - abhängig von der Prozesskette - vor oder nach der Durchkontaktierung strukturiert werden kann. Typische Durchmesser der Mikrokanäle sind bevorzugt kleiner als 1 $\mu$m, besonders bevorzugt kleiner als 500 nm, ganz besonders bevorzugt kleiner als 300 nm.

Mittels der optischen Anordnung kann das Filament durch eine chromatisch bedingte Transformation des einlaufenden Laserstrahls in einen besselartigen Strahl umgewandelt werden. DE 103 25 942 A1 und DE 10 2008 029 459 A1 zeigen spezielle Optiken bzw. Linsen, deren chromatische Aberration bewusst vergrößert wurde, um in Abhängigkeit von der Wellenlänge eine Fokussierung der Strahlanteile über einen Bereich der derart entstehenden Fokallinie hervor zu rufen. Die Fokusse dieser Systeme lassen sich über Bereiche von bis zu 30 cm verlängern. Ihre Anwendung finden diese Systeme im Bereich der hochpräzisen Abstands- und Konturvermessung bzw. bei transparenten Körpern auch zur Dickenmessung von ein- oder mehrschichtigen Substraten (als Differenz mehrerer Abstandsmessungen). Grundsätzlich können diese Optiken bzw. Linsen auch als optische Anordnungen mit chromatischer Aberration für die vorliegende Erfindung verwendet werden.

Bei der erfindungsgemäßen Vorrichtung kann ein gepulster, polychromatischer Laserstrahl durch die chromatische Aberration der abbildenden Optik (optische Anordnung) wellenlängenselektiv in eine entsprechende Intensitätsverteilung entlang der Brennlinie umgewandelt werden. Durch Kombination von spektraler Energieverteilung von Laserquelle und Filter (Filterfunktionen) kann die Intensitätsverteilung im Arbeitsvolumen entlang der Brennlinie exakt eingestellt werden.

Besonders vorteilhafte Ausführungsformen der erfindungsgemäßen Vorrichtung werden im Folgenden beschrieben.

Die Mittel zum Erzeugen eines gepulsten, polychromatischen Laserstrahls umfassen vorzugsweise wenigstens einen Superkontinuum-Faserlaser oder sie umfassen Mittel zur spektralen Verbreiterung des Laserpulses, insbesondere Mittel zur Verstärkung gechirpter Pulse (Chirped Pulse Amplification).

Bei der Verstärkung gechirpter Pulse wird der Laserpuls über Gitter entlang der Wellenlänge räumlich aufgefächert und dann verstärkt. Ein Dünnfilmtransistorbildschirm (TFT-Display, Thin-Film-Transistor-Display) vor einem Gitter kann (unter Intensitätsverlust) einzelne Wellenlängenbereiche scharf ausblenden. Damit können einzelne Zonen der Brennlinie in Laserstrahlrichtung ausgeblendet (gefiltert) werden. Beim Verstärken nach dem Abschatten kann die Verstärkerleistung auf die verbliebenen Welllenlängenbereiche angewendet werden, so dass die Laserstrahlleistung proportional weniger sinkt als beim Seeder ursprünglich abgeschattet. Injektionssähen (Injection-Seeder) ist hierbei eine Technik, die meistens auf gepulste Laser und optische parametrische Oszillatoren angewendet wird, meist mit dem Hauptziel, Emissionen mit einer schmaleren optischen Bandbreite (Linienbreite) zu erreichen. Im Wesentlichen bedeutet dies, dass Licht von einem Seed-Laser, der üblicherweise ein Einzelfrequenzlaser im Dauerwellenbetrieb ist, in einen Q-geschalteten Slave-Laser oder in einen Nanosekunden-optischen parametrischen Oszillator zu Beginn einer Pulsaufbauphase eingespeist wird. Ohne dieses Seed-Laserlicht würde der Slave-Laser oder OPO normalerweise auf Mehrfach-Resonator-Modi mit einer optischen Verstärkung von vergleichbarer Größe emittieren und die Leistungsverteilung bei mehreren Modi kann von Puls zu Puls schwanken. Wenn die optische Frequenz des Seed-Laserlichts nahe genug auf die Resonanzfrequenz eines bestimmten Resonatormodus des Slave-Geräts liegt, kann dieser Modus mit einer viel höheren Leistung als einer ganzen höheren Leistung beginnen und kann daher im Ausgangsimpuls stark dominieren. Auf diese Weise wird die Emissionsbandbreite drastisch reduziert, verglichen mit der ungehinderten (freilaufenden) Emission, und das zeitliche Pulsprofil kann glatter sein, da ein Modus-Schlagen vermieden wird.

Die Mittel zum Erzeugen eines gepulsten, polychromatischen Laserstrahls stellen bevorzugt wenigstens folgendes bereit:

- Mittlere Laserleistungen von 5 Watt bis 120 Watt
- Pulsdauer des Laserstrahls von kleiner 1 ns, bevorzugt kleiner 1 ps
- Burst-Modus 12 bis 48 ns
- Wellenlängenbereich des Laserstrahls 350 nm bis 2400 nm.

In einer Ausführungsform wird dabei die Wellenlänge der Laserquelle (Mittel zum Erzeugen eines gepulsten, polychromatischen Laserstrahls) auf einen Bereich eingeschränkt, in dem die Anzahl der Photonen zur Überbrückung der Bandlücke konstant bleibt.

Geeignete Mittel zum Erzeugen eines gepulsten, polychromatischen Laserstrahls, insbesondere Laserquellen können auf verschiedenste Arten bereitgestellt werden.

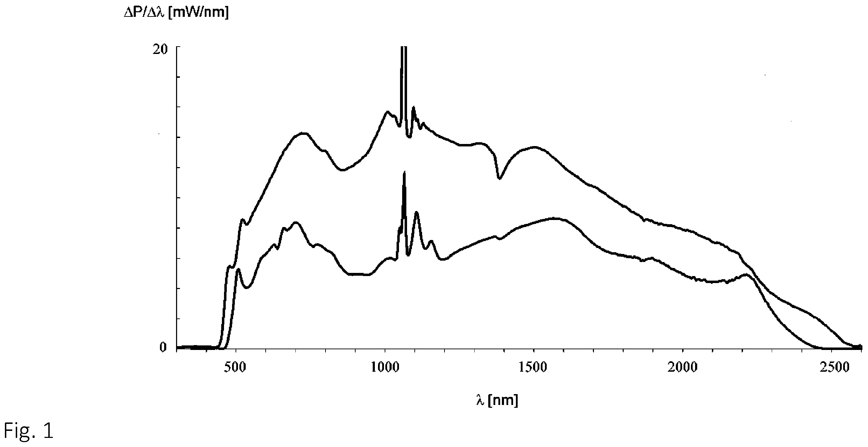

Bekannte Superkontinuum-Faserlaser emittieren beispielsweise Pulse im Bereich von kleiner 10 ps bei einer mittleren Leistung des Lasers von 20 Watt über einen Wellenlängenbereich von 350 nm bis 2400 nm. Derart verteilte Leistungsspektren erlauben die Bearbeitung von im Sichtbaren oder im Nahinfraroten Bereich transparenter Werkstücke. Figur 1 zeigt die spektrale Leistungsdichte eines typischen weißen Faserlasers. Die obere Kurve zeigt den Verlauf für eine mittlere Leistung des Lasers von 20 Watt. Die untere Kurve zeigt den Verlauf für eine mittlere Leistung des Lasers von 10 Watt. Die mittlere Leistung des Lasers ergibt sich durch Integration.

Eine andere Art gepulste, polychromatische Laserstrahlen zu erzeugen, ergibt sich aus dem Zusammenhang zwischen spektraler Bandweite $\Delta v$ und Pulsdauer $\Delta t$

$$\Delta v \; \Delta \tau \geq K \quad \Leftrightarrow \quad \Delta \tau \geq \frac{K}{\Delta v}$$

wobei K von der konkreten Pulsform abhängt nach

| Pulsform | I(t) | K |
|---|---|---|
| Gauß | $I(t) = e^{-4ln2 * \frac{t^2}{\Delta t}}$ | 0,441 |

| sech$^2$ | $I(t) = sech^2\left(\frac{1{,}76t}{\Delta t}\right)$ | 0,315 |

Hierbei ist $\Delta \tau$ die Pulsdauer, deren Wert als Halbwertsbreite (FWHM = Full width at half maximum) der Intensitätsverteilung I(t) ermittelt wird und Dn die spektrale Bandbreite / Frequenzbreite des Pulses at FWHM.

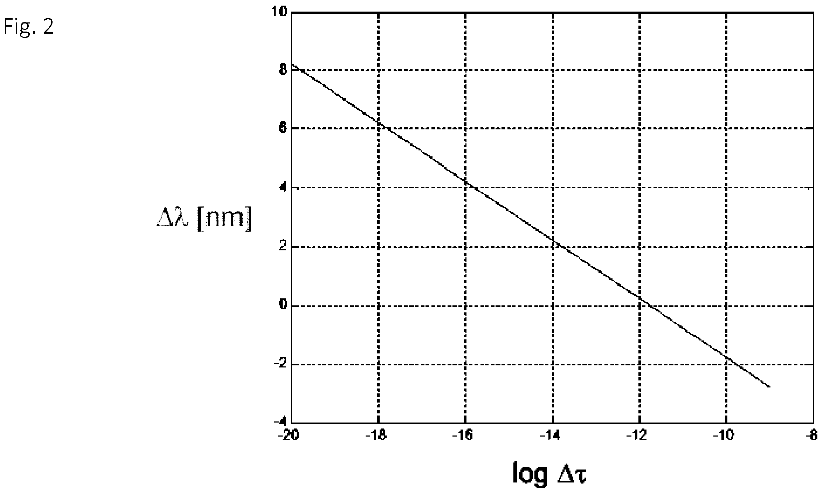

Nachfolgende Figur 2 zeigt die spektrale Verbreiterung des Pulses $\Delta \lambda$ in Abhängigkeit der Pulsbreite $\Delta \tau$ in doppelt-logarithmischer Darstellung bei einer zentralen Wellenlänge von 1064 nm, wobei folgende Berechnungsformel zugrunde gelegt wurde:

$$\Delta \lambda \geq \frac{K \; \lambda^2}{c \; \Delta \tau}$$

Beim Übergang von ps- zu fs-Pulsen ist eine Verbreiterung des Pulses auf die Größenordnung n x 100 nm zu erwarten. Weitere Verkürzung der Pulsdauer bis hin zu Attosekunden-Pulsen erzeugt faktisch eine Weißlichtverteilung. Nachteilig wirkt sich hierbei zunächst aus, dass die Wechselwirkung des kurzen fs-Pulses bzw. Attosekunden-Pulses mit dem Werkstück immer geringere Schädigungen im Material des Werkstücks hervorruft, so dass die Trennbarkeit des Werkstücks immer weiter abnimmt (Durch die kurze Wechselwirkungszeit des Pulses (der Photonen) kann keine Kopplung zu den Phononen des Materials auftreten, so dass keine direkte Erwärmung des Materials geschieht). Ausgleich kann hier durch eine erhebliche Erhöhung der Anzahl der Burst-Modus-Pulse geschehen.

Die optische Anordnung mit chromatischer Aberration umfasst bevorzugt wenigstens eine Konvexlinse aus Quarzglas oder sie umfasst wenigstens zwei Beugungsgitter.

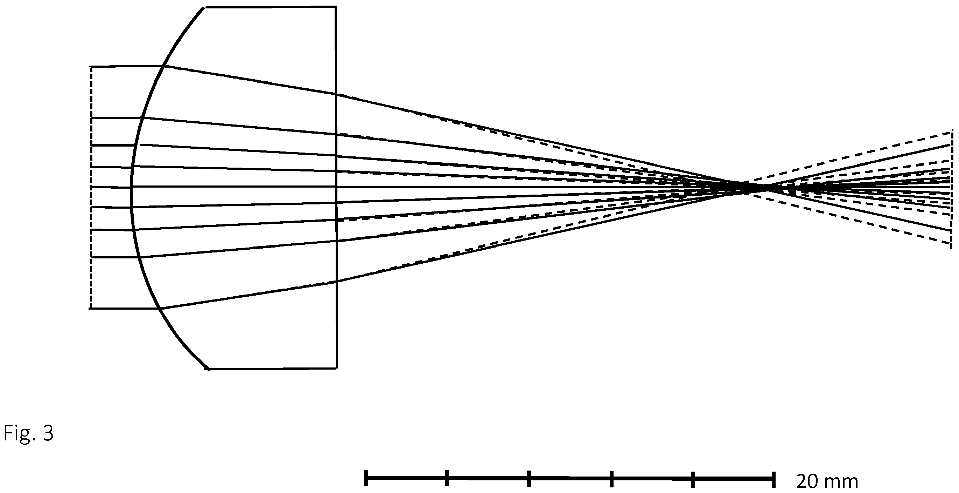

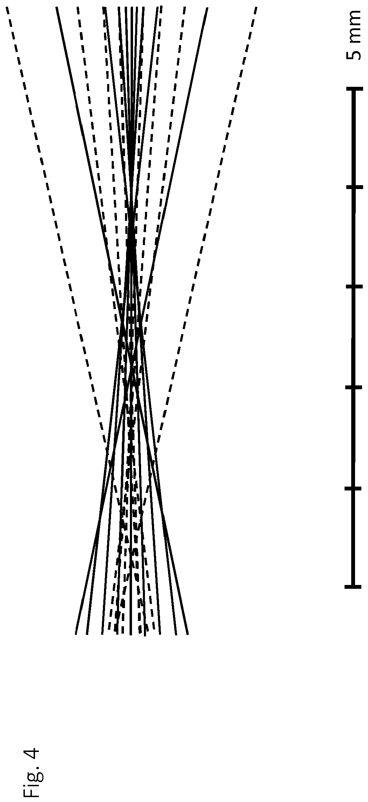

Eine Formung eines gepulsten, polychromatischen Laserstrahls im Wellenlängenbereich unter 800 nm mit einer optischen Anordnung mit chromatischer Aberration, die eine Konvexlinse aus Quarzglas umfasst, ist in Figur 3 abgebildet. Eine vergrößerte Sicht der Brennlinie mit den verschiedenen Fokussen zeigt Figur 4. In dieser Ausführung unterscheiden sich die Fokusse bei 350 nm und 1000 nm um etwa 2 mm, d.h. die Fokuspunkte der Wellenlängen 350 nm und 1000 nm sind um ca. 2 mm voneinander getrennt. Um diese Strecke kann also der Fokus durch spektrale Filterung gezielt verschoben werden. Diese Streckenverschiebung kann für verschiedene optische Anordnungen mit handelsüblichen Raytrace-Programmen berechnet werden. Raytracing (dt. Strahlverfolgung oder Strahlenverfolgung) ist ein auf der Aussendung von Strahlen basierender Algorithmus zur Verdeckungsberechnung, also zur Ermittlung der Sichtbarkeit von dreidimensionalen Objekten von einem bestimmten Punkt im Raum aus. Ebenfalls mit Raytracing bezeichnet man mehrere Erweiterungen dieses grundlegenden Verfahrens, die den weiteren Weg von Strahlen nach dem Auftreffen auf Oberflächen berechnen. In optischer Simulationssoftware wie beispielsweise Zemax wird der Weg eines Feldes von Lichtstrahlen, die von einem als segmentiert gedachten Objekt ausgehen, durch das abbildende optische System bis hin zum Detektor dargestellt.

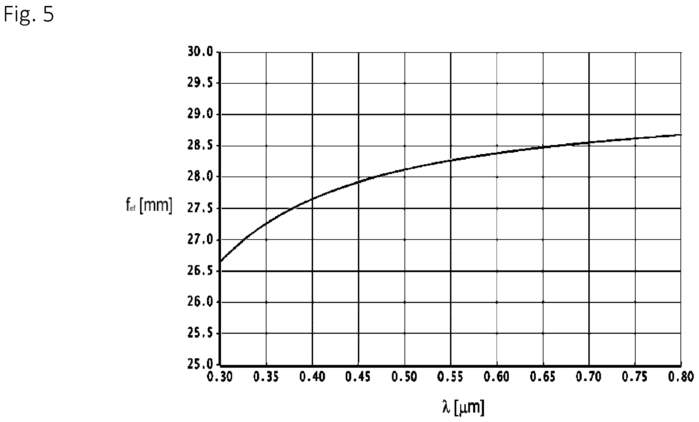

Figur 5 zeigt die effektive Brennweite für das in Figur 3 gezeigte System im Wellenlängenbereich von 0,30 $\mu$m bis 0,80 $\mu$m (300 nm bis 800 nm).

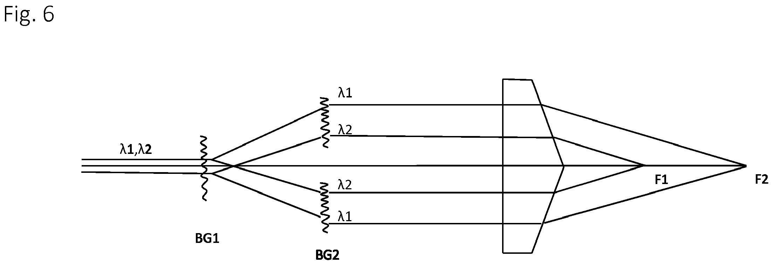

In einer weiteren Ausführung (Figur 6) wird der gepulste Laserstrahl durch zwei Beugungsgitter (BG1 und BG2) in einen Ringstrahl konvertiert, bei dem die kürzere Wellenlänge des Strahlspektrums $\lambda 1$ am äußeren Ring und die längere Wellenlänge des Strahlspektrums $\lambda 2$ am inneren Ring liegt. Wird dieser Ringstrahl nun mit einem Axikon oder einer ähnlichen Optik fokussiert, bilden sich mehrere Fokusse F1 und F2 aus, deren Lage von der Wellenlänge abhängt.

Der Filter ist bevorzugt ein Bandkantenfilter, insbesondere ein Hoch- oder Tiefpassfilter.

Der Filter ist bevorzugt vor der optischen Anordnung mit chromatischer Aberration im Strahlengang des Laserstrahls angeordnet. Er kann aber auch hinter der optischen Anordnung mit chromatischer Aberration im Strahlengang des Laserstrahls angeordnet werden (Es ist allerdings darauf zu achten, dass der Filter nicht in die Brennlinie hineinragt). Auch eine Anordnung von mehreren Filtern vor und/oder hinter der optischen Anordnung ist möglich.

Durch mehrere Filter können mehre Wellenlängen selektiv gefiltert werden, so dass die Brennlinie an mehreren Stellen selektiv keinen Fokus aufweist.

Die Verwendung von Bandkantenfiltern (Hoch- und Tiefpass) begrenzen die äußeren Positionen der Brennlinie, Bandsperren erlauben das Ausblenden bzw. die Inaktivierung einzelner Bereiche der Brennlinie. Die Kombination von spektraler Intensitätsverteilung der Laserquelle mit der Filterkurve der verwendeten Filter bestimmt eingangsseitig der optischen Anordnung mit chromatischer Aberration die Intensitätsverteilung des Laserstrahls (Mathematisch: Berechnung des Faltungsintegrals von Laserintensitätsverteilung und Filterkurve). Strahlausgangsseitig bestimmt die chromatische Aberration der optischen Anordnung die erreichte Intensitätsverteilung.

Das zu trennende Werkstück ist vorzugsweise zumindest teilweise transparent für den verwendeten Wellenlängenbereich des Lasers, dabei ist die Transmission des Werkstücks größer als 85 %, bevorzugt größer als 90 % besonders bevorzugt größer als 95 %.

Das zu trennende Werkstück umfasst insbesondere Glas, Glaskeramik oder Kunststoff.

Die Vorrichtung ist gemäß der Erfindung eine Vorrichtung zum Einbringen einer Trennlinie entlang der das Werkstück durch äußere Einwirkung, insbesondere durch mechanische oder thermische Einwirkung getrennt werden kann.

Die Vorrichtung ist insbesondere eine Vorrichtung zum Trennen eines Werkstückstapels oder eines Werkstück-Laminats aus gleichen oder aus unterschiedlichen Materialien.

Gelöst wird die Aufgabe gemäß Anspruch 9 mittels eines Verfahrens zum Trennen eines Werkstücks entlang einer vorbestimmten Bearbeitungslinie.

Das Verfahren enthält wenigstens die Schritte

- Erzeugen eines gepulsten, polychromatischen Laserstrahls,
- Führen des Laserstrahls durch eine optischen Anordnung zur Erzeugung einer Brennlinie entlang der Strahlrichtung des Laserstrahls, wobei die optische Anordnung eine chromatische Aberration zum wellenlängenabhängigen Fokussieren des Laserstrahls und wenigstens einem Filter zum wellenlängenabhängigen Filtern des Laserstrahls aufweist,
- Erzeugen einer Relativbewegung zwischen Laserstrahl und Werkstück entlang der vorbestimmten Bearbeitungslinie, um das Werkstück mittels Einwirkung des fokussierten Laserstrahls zu bearbeiten.

Bevorzugt wird der gepulste, polychromatische Laserstrahl mittels eines Superkontinuum-Faserlasers oder mittels spektraler Verbreiterung des Laserpulses, insbesondere mittels Verstärkung gechirpter Pulse erzeugt. Beim Erzeugen des Laserstrahls wird bevorzugt wenigstens folgendes eingestellt:

Pulsdauer des Laserstrahls kleiner 1 ns, bevorzugt kleiner 1 ps Burst-Modus 12 bis 48 ns Wellenlängenbereich des Laserstrahls 350 nm bis 2400 nm.

Als optische Anordnung mit chromatischer Aberration können bevorzugt wenigstens eine Konvexlinse aus Quarzglas oder wenigstens zwei Beugungsgitter verwendet werden.

Als Filter kann bevorzugt ein Bandkantenfilter, insbesondere ein Hoch- oder Tiefpassfilter, verwendet werden.

Bevorzugt wird ein Werkstück, das zumindest teilweise transparent für Wellenlängen des Lasers ist und das Glas, Glaskeramik oder Kunststoff umfasst, getrennt.

Das Verfahren ist gemäß der Erfindung ein Verfahren zum Einbringen einer Trennlinie entlang der das Werkstück durch äußere Einwirkung, insbesondere durch mechanische oder thermische Einwirkung trennbar ist.

Das Verfahren ist bevorzugt ein Verfahren zum Trennen eines Werkstückstapels oder eines Werkstück-Laminats aus gleichen oder aus unterschiedlichen Materialien.

Anhand der folgenden Ausführungsbeispiele wird die vorliegende Erfindung näher verdeutlicht.

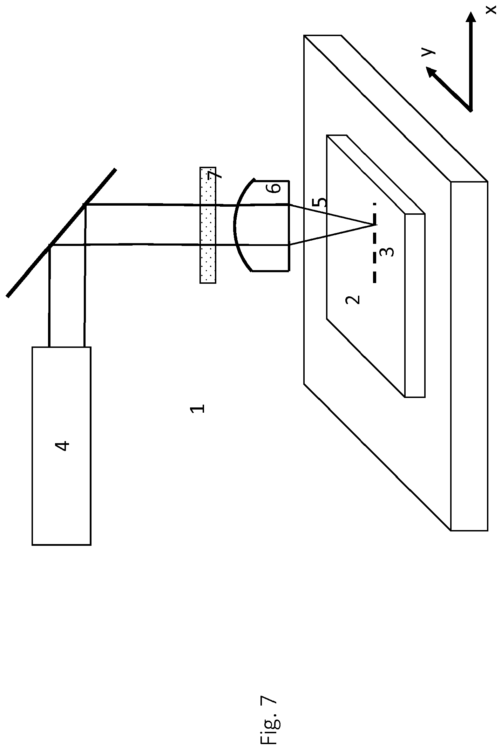

Figur 7 zeigt eine Vorrichtung (1) zum Trennen eines Werkstücks (2) entlang einer vorbestimmten Bearbeitungslinie (3), wobei die Vorrichtung (1) folgende Mittel aufweist:

Mittel (4) zum Erzeugen eines gepulsten, polychromatischen Laserstrahls (5), eine optische Anordnung (6) mit chromatischer Aberration zum wellenlängenabhängigen Fokussieren des Laserstrahls (5) und mit wenigstens einem Filter (7) zum wellenlängenabhängigen Filtern des Laserstrahls (5) zur Erzeugung einer Brennlinie (8) entlang der Strahlrichtung (Z-Richtung) des Laserstrahls,
Mittel zum Erzeugen einer Relativbewegung (nicht dargestellt) zwischen Laserstrahl (5) und Werkstück (2) entlang der vorbestimmten Bearbeitungslinie (3), um das Werkstück (2) mittels Einwirkung der Brennlinie (8) des Laserstrahls (5) zu bearbeiten.

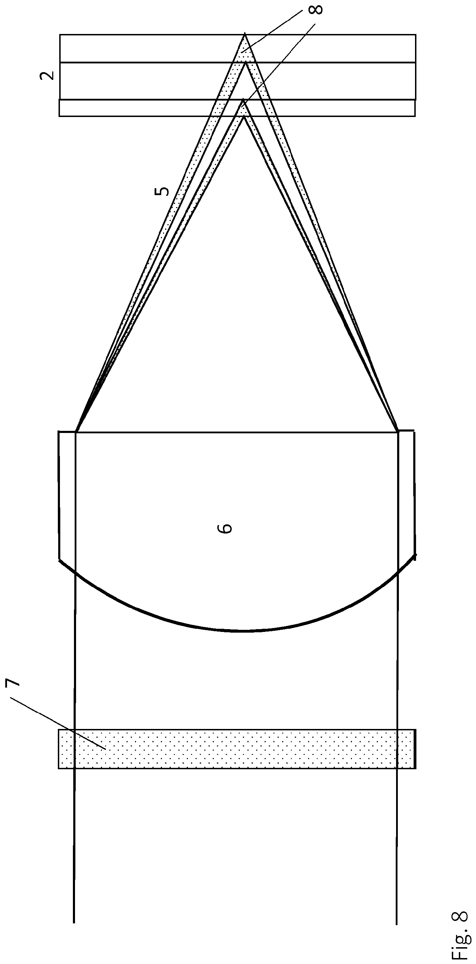

In Figur 8 ist der Vorteil der vorliegenden Erfindung dargestellt: Das Trennen eines Werkstücks entlang einer vorbestimmten Bearbeitungslinie mittels gepulsten Laserstrahlen, wobei die Bearbeitungstiefe selektiv eingestellt ist.

**Patentansprüche**

1. Vorrichtung (1) zum Trennen eines Werkstücks (2) entlang einer vorbestimmten Bearbeitungslinie (3) mittels eines fokussierten Laserstrahles (5), umfassend wenigstens: -Mittel zum Erzeugen einer Relativbewegung zwischen dem Laserstrahl (5) und dem Werkstück (2) entlang einer vorbestimmten Bearbeitungslinie (3), um das Werkstück (2) mittels Einwirkung des fokussierten Laserstrahls (5) entlang einer erzeugten Brennlinie zu bearbeiten und durch äußere Einwirkung zu trennen **gekennzeichnet durch** :

- Mittel (4) zum Erzeugen eines gepulsten, polychromatischen Laserstrahls (5),
- eine optische Anordnung (6) zur Erzeugung der Brennlinie (8) entlang der Strahlrichtung des Laserstrahls (5), wobei die optische Anordnung (6) eine chromatische Aberration zum wellenlängenabhängigen Fokussieren des Laserstrahls (5) und wenigstens einen Filter (7) zum wellenlängenabhängigen Filtern des Laserstrahls (5) aufweist.

2. Vorrichtung nach Anspruch 1,
   **dadurch gekennzeichnet,**
   **dass** die Mittel (4) zum Erzeugen eines gepulsten, polychromatischen Laserstrahls (5) Superkontinuum-Faserlaser oder Mittel zur spektralen Verbreiterung des Laserpulses, insbesondere Mittel zur Verstärkung gechirpter Pulse umfassen.

3. Vorrichtung nach einem der vorhergehenden Ansprüche,
   **dadurch gekennzeichnet,**
   **dass** die Mittel (4) zum Erzeugen eines gepulsten, polychromatischen Laserstrahls (5) wenigstens folgendes bereitstellen:

   Mittlere Laserleistung 5 bis 120 Watt;
   Pulsdauer des Laserstrahls (5) kleiner 1 ns, bevorzugt kleiner 1 ps;
   Burst-Modus 12 bis 48 ns;
   Wellenlängenbereich des Laserstrahls (5) 350 nm bis 2400 nm.

4. Vorrichtung nach einem der vorhergehenden Ansprüche,
   **dadurch gekennzeichnet,**
   **dass** die optische Anordnung (6) wenigstens eine Konvexlinse aus Quarzglas oder wenigstens zwei Beugungsgitter (BG1, BG2) umfasst.

5. Vorrichtung nach einem der vorhergehenden Ansprüche,
   **dadurch gekennzeichnet,**
   **dass** der Filter (7) ein Bandkantenfilter, insbesondere ein Hoch- oder Tiefpassfilter, ist.

6. Vorrichtung nach einem der vorhergehenden Ansprüche in Kombination mit dem Werkstück (2),
   **dadurch gekennzeichnet,**
   **dass** das Werkstück (2) zumindest teilweise transparent für Wellenlängen des Lasers ist und, dass das Werkstück (2) Glas, Glaskeramik oder Kunststoff umfasst.

7. Vorrichtung nach einem der vorhergehenden Ansprüche,
   **dadurch gekennzeichnet,**
   **dass** die Vorrichtung so eingestellt ist, dass das Trennen des Werkstücks durch mechanische oder thermische Einwirkung erfolgt.

8. Vorrichtung nach einem der vorhergehenden Ansprüche in Kombination mit dem Werkstück (2), **dadurch gekennzeichnet, dass** das Werkstück (2) ein Stapel oder ein Werkstück-Laminat aus gleichen oder aus unterschiedlichen Materialien besteht.

9. Verfahren zum Trennen eines Werkstücks (2) entlang einer vorbestimmten Bearbeitungslinie (3) **gekennzeichnet durch** wenigstens die Schritte

   - Erzeugen eines gepulsten, polychromatischen Laserstrahls (5),
   - Führen des Laserstrahls (5) durch eine optische Anordnung (6) zur Erzeugung einer Brennlinie (8) entlang der Strahlrichtung des Laserstrahls (5), wobei die optische Anordnung (6) eine chromatische Aberration zum wellenlängenabhängigen Fokussieren des Laserstrahls (5) und wenigstens einen Filter (7) zum wellenlängenabhängigen Filtern des Laserstrahls (5) aufweist,
   - Erzeugen einer Relativbewegung zwischen Laserstrahl (5) und Werkstück (2) entlang der vorbestimmten Bearbeitungslinie (3), um das Werkstück (2) mittels Einwirkung des fokussierten Laserstrahls (5) zu bearbeiten,
   - Trennen des Werkstücks durch äußere Einwirkung.

10. Verfahren nach Anspruch 9,
    **dadurch gekennzeichnet,**
    **dass** der gepulste, polychromatische Laserstrahl (5) mittels eines Superkontinuum-Faserlasers oder mittels spektraler Verbreiterung des Laserpulses, insbesondere mittels Verstärkung gechirpter Pulse erzeugt wird.

11. Verfahren nach Anspruch 9 oder 10,
    **dadurch gekennzeichnet,**
    **dass** beim Erzeugen des Laserstrahls (5) wenigstens folgendes eingestellt wird:

    Pulsdauer des Laserstrahls (5) kleiner 1 ns, bevorzugt kleiner 1 ps;
    Burst-Modus 12 bis 48 ns;
    Wellenlängenbereich des Laserstrahls (5) 350 nm bis 2400 nm.

**12.** Verfahren nach einem der vorhergehenden Ansprüche 9 bis 11,
**dadurch gekennzeichnet,**
**dass** zur chromatischen Aberration zum wellenlängenabhängigen Fokussieren des Laserstrahls (5) wenigstens eine Konvexlinse aus Quarzglas oder wenigstens zwei Beugungsgitter (BG1, BG2) verwendet werden.

**13.** Verfahren nach einem der vorhergehenden Ansprüche 9 bis 12,
**dadurch gekennzeichnet,**
**dass** als Filter (7) ein Bandkantenfilter, insbesondere ein Hoch- oder Tiefpassfilter, verwendet wird.

**14.** Verfahren nach einem der vorhergehenden Ansprüche 9 bis 13,
**dadurch gekennzeichnet,**
**dass** ein Werkstück (2), das zumindest teilweise transparent für Wellenlängen des Lasers ist und das Glas, Glaskeramik oder Kunststoff umfasst, getrennt wird.

**15.** Verfahren nach einem der vorhergehenden Ansprüche 9 bis 14,
**dadurch gekennzeichnet,**
**dass** das Trennen des Werkstücks durch mechanische oder thermische Einwirkung erfolgt.

**16.** Verfahren nach einem der vorhergehenden Ansprüche 9 bis 15 zum Trennen eines Werkstückstapels oder eines Werkstück-Laminats aus gleichen oder aus unterschiedlichen Materialien.

**Claims**

**1.** A device (1) for separating a workpiece (2) along a predetermined processing line (3) via a focussed laser-beam (5), comprising at least

- means for generating a relative movement between the laser beam (5) and the workpiece (2) along a predetermined processing line (3), in order to process the workpiece (2) by means of action of the focused laser beam (5) along a generated focal line and to separate it by external action,

**characterized by**

- means (4) for generating a pulsed polychromatic laser beam (5),
- an optical arrangement (6) for generating the focal line (8) along the beam direction of the laser beam (5), the optical arrangement (6) having chromatic aberration for wavelength-dependent focusing of the laser beam (5) and at least one filter (7) for wavelength-dependent filtering of the laser beam (5).

**2.** The device as claimed in claim 1,
**characterized in that**
the means (4) for generating a pulsed polychromatic laser beam (5) comprise supercontinuum fiber lasers or means for spectral broadening of the laser pulse, in particular means for amplifying chirped pulses.

**3.** The device as claimed in one of the preceding claims,
**characterized in that**
the means (4) for generating a pulsed polychromatic laser beam (5) provide at least the following:

average laser power 5 to 120 watts;
pulse duration of the laser beam (5) less than 1 ns, preferably less than 1 ps;
burst mode 12 to 48 ns;
wavelength range of the laser beam 350 nm to 2400 nm.

**4.** The device as claimed in one of the preceding claims,
**characterized in that**
the optical arrangement (6) comprise at least one convex lens made of quartz glass or at least two diffraction gratings (BG1, BG2).

**5.** The device as claimed in one of the preceding claims,
**characterized in that**
the filter (7) is a band edge filter, in particular a highpass or lowpass filter.

**6.** The device as claimed in one of the preceding claims in combination with the workpiece (2),
**characterized in that**
the workpiece (2) is at least partially transparent for wavelengths of the laser, and **in that** the workpiece (2) comprises glass, glass ceramic or plastic.

**7.** The device as claimed in one of the preceding claims,
**characterized in that**
the device is configured such that the workpiece is separated by mechanical or thermal action.

**8.** The device as claimed in one of the preceding claims in combination with the workpiece (2),
**characterized in that**
the workpiece (2) is a workpiece stack or a workpiece laminate made of the same or different materials.

**9.** A method for separating a workpiece (2) along a predetermined processing line (3), **characterized by** at least the steps

- generating a pulsed polychromatic laser beam (5),

- guiding the laser beam (5) using an optical arrangement (6) in order to generate a focal line (8) along the beam direction of the laser beam (5), the optical arrangement (6) having chromatic aberration for wavelength-dependent focusing of the laser beam (5) and at least one filter (7) for wavelength-dependent filtering of the laser beam (5),

- generating a relative movement between the laser beam (5) and the workpiece (2) along the predetermined processing line (3), in order to process the workpiece (2) by means of action of the focused laser beam (5),

- separating the workpiece (2) by external action.

10. The method as claimed in claim 9,
**characterized in that**
the pulsed polychromatic laser beam (5) is generated by means of a supercontinuum fiber laser or by means of spectral broadening of the laser pulse, in particular by means of amplifying chirped pulses.

11. The method as claimed in claim 9 or 10,
**characterized in that**
at least the following are adjusted during the generation of the laser beam (5):

pulse duration of the laser beam (5) less than 1 ns, preferably less than 1 ps;
burst mode 12 to 48 ns;
wavelength range of the laser beam 350 nm to 2400 nm.

12. The method as claimed in one of the preceding claims 9 to 11,
**characterized in that**
at least one convex lens made of quartz glass or at least two diffraction gratings (BG1, BG2) are used for chromatic aberration for wavelength-dependent focusing of the laser beam (5).

13. The method as claimed in one of the preceding claims 9 to 12,
**characterized in that**
a band edge filter, in particular a highpass or lowpass filter, is used as the filter (7).

14. The method as claimed in one of the preceding claims 9 to 13,
**characterized in that**
a workpiece (2), which is at least partially transparent for wavelengths of the laser, and comprises glass, glass ceramic or plastic, is separated.

15. The method as claimed in one of the preceding claims 9 to 14
**characterized in that**

the workpiece is separated by mechanical or thermal action.

16. The method as claimed in one of the preceding claims 9 to 15 for separating a workpiece stack or a workpiece laminate made of the same or different materials.

**Revendications**

1. Dispositif (1) destiné à découper une pièce (2) le long d'une ligne d'usinage (3) prédéfinie au moyen d'un faisceau laser (5) focalisé, comprenant au moins :

- des moyens destinés à la production d'un mouvement relatif entre le faisceau laser (5) et la pièce (2) le long d'une ligne d'usinage (3) prédéfinie pour usiner la pièce (2) au moyen d'une action du faisceau laser (5) focalisé le long d'une ligne focale produite et pour la découper par une action extérieure,

**caractérisé par** :

- des moyens (4) destinés à produire un faisceau laser (5) polychromatique pulsé,
- un ensemble optique (6) destiné à produire la ligne focale (8) le long de la direction de faisceau du faisceau laser (5), l'ensemble optique (6) comportant une aberration chromatique destinée à la focalisation du faisceau laser (5) en fonction de la longueur d'onde et au moins un filtre (7) pour le filtrage du faisceau laser (5) en fonction de la longueur d'onde.

2. Dispositif selon la revendication 1,
**caractérisé en ce que**
les moyens (4) destinés à produire un faisceau laser (5) polychromatique pulsé comprennent des lasers à fibre supercontinuum ou des moyens destinés à l'élargissement spectral de l'impulsion laser, en particulier des moyens destinés à renforcer des impulsions à pas variable.

3. Dispositif selon l'une des revendications précédentes,
**caractérisé en ce que**
les moyens (4) destinés à produire un faisceau laser (5) polychromatique pulsé fournissent au moins ce qui suit :

puissance laser moyenne de 5 à 120 watts ;
durée d'impulsion du faisceau laser (5) inférieure à 1 ns, de préférence inférieure à 1 ps ;
mode rafale de 12 à 48 ns ;
plage de longueurs d'onde du faisceau laser (5) de 350 nm à 2 400 nm.

4. Dispositif selon l'une des revendications précédentes,
   **caractérisé en ce que**
   l'ensemble optique (6) comprend au moins une lentille convexe en verre de quartz ou au moins deux réseaux de diffraction (BG1, BG2).

5. Dispositif selon l'une des revendications précédentes,
   **caractérisé en ce que**
   le filtre (7) est un filtre en bordure de la bande, en particulier un filtre passe-haut ou passe-bas.

6. Dispositif selon l'une des revendications précédentes en combinaison avec la pièce (2),
   **caractérisé en ce que**
   la pièce (2) est au moins partiellement transparente aux longueurs d'onde du laser et **en ce que** la pièce (2) comprend du verre, de la vitrocéramique ou de la matière plastique.

7. Dispositif selon l'une des revendications précédentes,
   **caractérisé en ce que**
   le dispositif est réglé de telle sorte que la découpe de la pièce s'effectue par une action mécanique ou thermique.

8. Dispositif selon l'une des revendications précédentes en combinaison avec la pièce (2), **caractérisé en ce que** la pièce (2) est un empilement ou un laminé de pièces composé de matériaux identiques ou différents.

9. Procédé destiné à découper une pièce (2) le long d'une ligne d'usinage (3) prédéfinie,
   **caractérisé par** les au moins les étapes

   - la production d'un faisceau laser (5) polychromatique pulsé,
   - le guidage du faisceau laser (5) par un ensemble optique (6) pour la production d'une ligne focale (8) le long de la direction de faisceau du faisceau laser (5), l'ensemble optique (6) comportant une aberration chromatique pour la focalisation du faisceau laser (5) en fonction de la longueur d'onde et au moins un filtre (7) pour le filtrage du faisceau laser (5) en fonction de la longueur d'onde,
   - la production d'un mouvement relatif entre le faisceau laser (5) et la pièce (2) le long de la ligne d'usinage (3) prédéfinie pour usiner la pièce (2) au moyen de l'action du faisceau laser (5) focalisé,
   - la découpe de la pièce par une action extérieure.

10. Procédé selon la revendication 9,
    **caractérisé en ce que**
    le faisceau laser (5) polychromatique pulsé est produit au moyen d'un laser à fibre supercontinuum ou au moyen de l'élargissement spectral de l'impulsion laser, en particulier au moyen du renforcement d'impulsions à pas variable.

11. Procédé selon la revendication 9 ou 10,
    **caractérisé en ce que**,
    lors de la production du faisceau laser (5), il est procédé au moins aux réglages suivants:

    durée d'impulsion du faisceau laser (5) inférieure à 1 ns, de préférence inférieure à 1 ps ;
    mode rafale de 12 à 48 ns ;
    plage de longueurs d'onde du faisceau laser (5) de 350 nm à 2 400 nm.

12. Procédé selon l'une des revendications précédentes 9 à 11,
    **caractérisé en ce que**,
    pour l'aberration chromatique destinée à la focalisation du faisceau laser (5) en fonction de la longueur d'onde, il est utilisé au moins une lentille convexe en verre de quartz ou au moins deux réseaux de diffraction (BG1, BG2).

13. Procédé selon l'une des revendications précédentes 9 à 12,
    **caractérisé en ce que**,
    en tant que de filtre (7), il est utilisé un filtre en bordure de la bande, en particulier un filtre passe-haut ou passe-bas.

14. Procédé selon l'une des revendications précédentes 9 à 13,
    **caractérisé en ce**
    **qu'**une pièce (2) qui est au moins partiellement transparente aux longueurs d'onde du laser et qui comprend du verre, de la vitrocéramique ou de la matière plastique est découpée.

15. Procédé selon l'une des revendications précédentes 9 à 14,
    **caractérisé en ce que**
    la découpe de la pièce de la pièce s'effectue par une action mécanique ou thermique.

16. Procédé selon l'une des revendications précédentes 9 à 15 pour la découpe d'un empilement de pièces ou d'un laminé de pièces composé de pièces de matériaux identiques ou différents.

ΔP/Δλ [mW/nm]

λ [nm]

Fig. 1

Fig. 2

20 mm

Fig. 3

Fig. 4

5 mm

Fig. 5

Fig. 6

Fig. 7

Fig. 8

**EP 3 624 984 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2016031745 A1
- US 20130126573 A1
- EP 2754524 A1
- CN 102785031 A
- US 2015165560 A
- DE 102012110971 A1
- DE 102015110422 A1
- DE 102015116848 A1
- DE 102015111491 A1
- DE 102015116846 A1
- DE 102015111490 A1
- DE 102015120950 A1
- DE 102016102768 A1
- DE 102017100015

- DE 102017206461
- DE 102017100755
- DE 102017103381
- US 20050024743 A1
- KR 101407994 B1
- US 20120255935 A1
- US 2016167166 A1
- JP 2010158686 A
- WO 2016077171 A2
- US 20050205536 A1
- EP 2250529 B1
- US 20160009066 A1
- DE 10325942 A1
- DE 102008029459 A1